Europäisches Patentamt

European Patent Office

Office européen des brevets

(19)

(11) Numéro de publication : **0 119 116
B1**

(12)

# FASCICULE DE BREVET EUROPÉEN

(45) Date de publication du fascicule du brevet :
07.09.88

(51) Int. Cl.⁴ : **G 02 B   6/26**

(21) Numéro de dépôt : **84400259.2**

(22) Date de dépôt : **08.02.84**

(54) **Dispositif de transmission de signaux lumineux entre des fibres optiques.**

(30) Priorité : **08.02.83 FR 8301948**

(43) Date de publication de la demande :
**19.09.84 Bulletin 84/38**

(45) Mention de la délivrance du brevet :
**07.09.88 Bulletin 88/36**

(84) Etats contractants désignés :
**AT BE CH DE FR GB IT LI LU NL SE**

(56) Documents cités :
**FR-A-   959 131
US-A- 3 759 590
APPLIED OPTICS, vol. 20, no. 18, 15 septembre 1981,
pages 3136-3145, Optical Society of America, New
York, US A. NICIA: "Lens coupling in fiber-optic
devices: efficiency limits"
APPLIED OPTICS, vol. 21, no. 19, 1 octobre 1982,
pages 3475-3483, Optical Society of America, New
York, US S. MASUDA et al.: "Low-loss lens connector
for single-mode fibers"
HOW THINGS WORK, vol. 1, 1979, page 142, Granada
Publishing, St. Albans, Herts., GB**

(73) Titulaire : **SOCIETE D'OPTIQUE, PRECISION ELEC-
TRONIQUE ET MECANIQUE - SOPELEM
102 rue Chaptal
F-92300 Levallois-Perret (FR)**

(72) Inventeur : **Sellin, Rémy
2 allée Leriche
F-93110 Rosny-sous-Bois (FR)**
Inventeur : **Baluteau, Jean-Michel
77 allée de Chartres
F-93190 Livry-Gargan (FR)**
Inventeur : **Fillol, Bernard
126 boulevard du Montparnasse
F-75014 Paris (FR)**

(74) Mandataire : **Phélip, Bruno et al
c/o Cabinet Harlé & Phélip 21, rue de La Rochefoucauld
F-75009 Paris (FR)**

## Description

La présente invention se rapporte à un dispositif disposé entre au moins une fibre optique d'émission et au moins une fibre optique de réception, et comprenant une optique de collimation avant, convergente, formée d'au moins une lentille et placée immédiatement en arrière de ladite fibre d'émission et une optique de focalisation arrière, convergente, formée d'au moins une lentille et placée immédiatement en avant de ladite fibre de réception.

Les dispositifs du type ci-dessus sont connus et adaptés au couplage de fibres rapprochées mais ne permettent pas de coupler des fibres éloignées en minimisant les pertes de flux.

La présente invention a pour but de minimiser les pertes de flux dans la transmission du signal lumineux entre les fibres dans un dispositif adapté au couplage de fibres éloignées.

Selon l'invention, le dispositif de transmission de signaux lumineux entre au moins une fibre d'émission et au moins une fibre optique de réception comprend : une optique-amont convergente, formée d'au moins une lentille et placée au voisinage de l'extrémité de ladite fibre d'émission de laquelle elle est séparée par une intervalle ; une optique-aval convergente, formée d'au moins une lentille et placée au voisinage de l'extrémité de ladite fibre de réception de laquelle elle est séparée par une intervalle, les optiques et les extrémités des fibres étant agencées de façon telle que l'optique-amont forme une image intermédiaire qui est projetée par l'optique-aval sur la fibre réceptrice ; et une optique de champ convergente formée d'au moins une lentille disposée dans le plan de l'image intermédiaire et agencée pour conjuguer théoriquement le foyer image de l'optique-amont avec le foyer objet de l'optique-aval.

L'invention va maintenant être décrite avec plus de détails en se référant à un mode de réalisation donné à titre d'exemple et représenté par les dessins.

La figure 1 représente schématiquement le dispositif selon l'invention.

La figure 2 est une variante de la figure 1.

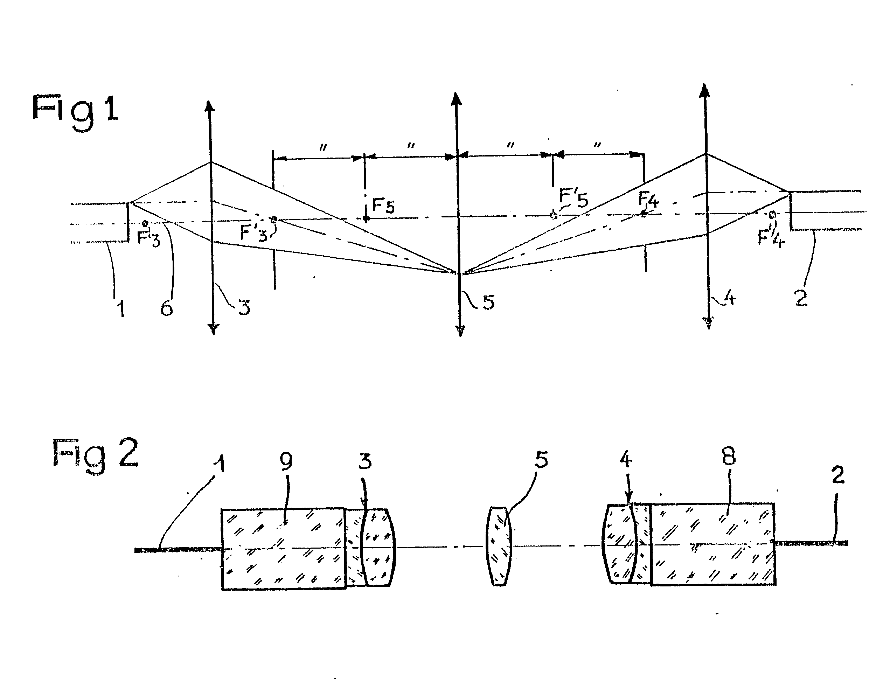

Le dispositif représenté par la figure 1 couple deux fibres optiques 1 et 2, l'une 1 étant la fibre d'émission, l'autre 2 la fibre de réception. Par fibre optique on entend une fibre unique ou un groupe de fibres. Les deux fibres peuvent donc être coaxiales ou non.

Le dispositif proprement dit comprend une optique-amont 3 formée d'une lentille convergente et placée au voisinage de la fibre d'émission 1 de laquelle elle est séparée par un intervalle d'air ou de verre. Elle dirige le flux venant de ladite fibre. Il comprend une optique-aval de focalisation 4 formée d'une lentille convergente et placée au voisinage de la fibre de réception 2 de laquelle elle est séparée par un intervalle d'air ou de verre. Elle focalise le flux sur ladite fibre 2.

Les foyers F3 et F'4 des optiques 3 et 4 ne sont pas placés sur les extrémités des fibres. L'intervalle entre l'optique 3 ou 4 et les extrémités des fibres 1 ou 2 respectivement est supérieur à la distance focale. L'optique 3 forme une image intermédiaire qui est projetée par l'optique 4 sur la fibre réceptrice 2. Une optique de champ 5 convergente est centrée sur l'axe optique entre les optiques 3 et 4. Elle est constituée par une seule lentille ou par au moins deux lentilles collées et elle est séparée par un intervalle d'air de chaque optique 3 ou 4. Le rôle de cette optique 5 est de projeter le foyer image F'3 sur le foyer objet F4. Dans le mode de réalisation représenté où les ouvertures numériques des fibres sont égales et où les optiques 3 et 4 sont identiques, l'optique 5 travaille au grandissement 1.

Le flux émis par un point de la fibre émettrice 1 se situe dans un cône dont l'axe est normal à la surface de la fibre. De la même façon la fibre de réception 2 ne transmet que les rayons arrivant dans un cône dont l'axe est normal à la surface d'entrée de la fibre.

Du fait que les foyers F'3 et F4 des optiques sont théoriquement conjugués, tous les axes des cônes de lumière émis par les points de la surface émettrice de la fibre 1 arrivent perpendiculairement sur la surface réceptrice de la fibre 2.

Autrement dit, le dispositif optique décrit est tel que la pupille d'entrée et la pupille de sortie sont rejetées à l'infini.

En variante, on pourrait réaliser un dispositif ayant au moins deux images intermédiaires de la fibre en ajoutant au moins un objectif intermédiaire entre les optiques 3 et 4. De ce fait, le dispositif comprendrait une ou plusieurs lentilles de champ sur les images intermédiaires de manière à conjuguer le foyer image de la première optique et le foyer objet de la dernière optique.

Pour supprimer la perte à la sortie ou à l'entrée de la fibre qui n'est pas une surface traitée, on peut avoir avantage comme sur la figure 2 à accoler des blocs de verre 8 et 9 qui réalisent chacun la jonction entre une fibre 1 ou 2 et l'optique associée 3 ou 4.

Si la conjugaison théorique des foyers n'est pas réalisée à quelques pourcents près, les pertes de couplage entre les deux fibres optiques deviennent inadmissibles.

Le dispositif s'applique notamment aux connecteurs. Il pourrait être utilisé pour le couplage de câbles de fibres optiques.

## Revendication

Dispositif de transmission de signaux lumineux entre au moins une fibre optique d'émission (1) et au moins une fibre optique de réception (2), comprenant : une optique-amont (3) convergente, formée d'au moins une lentille et placée au voisinage de l'extrémité de ladite fibre d'émission (1) de laquelle elle est séparée par un intervalle ;

une optique-aval (4) convergente, formée d'au moins une lentille et placée au voisinage de l'extrémité de ladite fibre de réception (2) de laquelle elle est séparée par un intervalle, les optiques et les extrémités des fibres étant agencées de façon telle que l'optique-amont forme une image intermédiaire qui est projetée par l'optique-aval sur la fibre réceptrice ; et une optique de champ convergente (5) formée d'au moins une lentille disposée dans le plan de l'image intermédiaire et agencée pour conjuguer théoriquement le foyer image de l'optique-amont (3) avec le foyer objet de l'optique-aval (4).

**Claim**

Device for the transmission of light signals between at least one emission optical fibre (1) and at least one reception optical fibre (2), comprising : a converging upstream optical system (3), formed of at least one lens and located in the vicinity of the end of the said emission fibre (1), from which it is separated by an interval ; a converging downstream optical system (4), formed of at least one lens and located in the vicinity of the end of the said reception fibre (2), from which it is separated by an interval, the optical systems and the ends of the fibres being arranged in such a manner that the upstream optical system forms an intermediate image which is projected by the downstream optical system onto the reception fibre ; and a converging field optical system (5) formed of at least one lens located in the plane of the intermediate image and arranged to conjugate theoretically the image focus of the upstream optical system (3) with the object focus of the down-stream optical system (4).

**Patentanspruch**

Vorrichtung zum Übermitteln von optischen Signalen zwischen mindestens einer optischen Emissionsfaser (1) und mindestens einer optischen Aufnahmefaser (2), mit : einer konvergierenden, aufstromigen Optik (3), die aus mindestens einer Linse gebildet und in der Nachbarschaft des Endes der Emissionsfaser (1) angeordnet ist, von der sie durch einen Abstand getrennt ist ; einer abstromigen, konvergierenden Optik (4), die aus mindestens einer Linse gebildet und in der Nachbarschaft des Endes der Aufnahmefaser (2) angeordnet ist, von der sie durch einen Abstand getrennt ist, wobei die Optiken und die Enden der Fasern derart angeordnet sind, daß die aufstromige Optik ein Zwischenbild bildet, welches durch die abstromige Optik auf die Aufnahmefaser projiziert wird ; und eine konvergierende Feldoptik (5), die aus mindestens einer Linse gebildet, am Ort des Zwischenbildes angeordnet und für das theoretische Zuordnen des hinteren Objektivbrennpunktes der aufstromigen Optik (3) mit dem vorderen Objektivbrennpunkt der abstromigen Optik (4) angeordnet ist.

Fig 1

Fig 2

0 119 116